**Europäisches Patentamt**

**European Patent Office**

**Office européen des brevets**

(19)

(11) Veröffentlichungsnummer: **0 173 791**
**B1**

(12) **EUROPÄISCHE PATENTSCHRIFT**

(45) Veröffentlichungstag der Patentschrift:
02.03.88

(51) Int. Cl.⁴: **C 08 L 53/00**, C 08 L 9/00//
**B60C1/00**

(21) Anmeldenummer: **85102067.7**

(22) Anmeldetag: **26.02.85**

(54) **Kautschukgemisch.**

(30) Priorität: **18.04.84 DE 3414657**
**05.07.84 DE 3424699**

(43) Veröffentlichungstag der Anmeldung:
**12.03.86 Patentblatt 86/11**

(45) Bekanntmachung des Hinweises auf die Patenterteilung: **02.03.88 Patentblatt 88/09**

(84) Benannte Vertragsstaaten:
**AT BE CH DE FR GB IT LI LU NL SE**

(56) Entgegenhaltungen:
**DE-A- 2 726 039**
**DE-C- 3 414 657**
**US-A- 3 363 659**
**US-A- 4 167 544**
**DERWENT JAPANESE PATENTS GAZETTE, Section Chemical, J5-A, Woche 83/35, 12. Oktober 1983, Seite 7, Derwent Publications**

(73) Patentinhaber: **HÜLS AKTIENGESELLSCHAFT**
**- RSP Patente / PB 15 - Postfach 13 20**
**D-4370 Marl 1 (DE)**

(72) Erfinder: **Nordsiek, Karl-Heinz, Dr.**
**Neumarkstrasse 4**
**D-4370 Marl (DE)**
Erfinder: **Wolpers, Jürgen, Dr.**
**Beisingstrasse 16**
**D-4630 Bochum (DE)**
Erfinder: **Tornau, Johannes, Dr.**
**An der Mühlenstege 20**
**D-4358 Haltern (DE)**

## Beschreibung

Die Erfindung betrifft ein Kautschukgemisch, mit welchem die Laufflächen von Kraftfahrzeug-Luftreifen hergestellt werden können.

Reifenlaufflächen werden im allgemeinen aus einer in der Hitze vulkanisierbaren Masse (einem Rohlaufstreifen) erhalten. Die Masse enthält eine Kautschukkomponente.

Reifenlaufflächen sollen ein gutes Eigenschaftsbild aufweisen, das durch die folgende Eigenschaftskombination beschrieben werden kann :

a) hohe Flexibilität (hohe Elastizität) im jeweils gewünschten Temperaturbereich, d. h. Erhaltung des gummielastischen Zustandes auch bei tiefen Temperaturen (gute Kälteeigenschaften) ;

b) hohe Dämpfung im jeweils gewünschten Temperaturbereich und dementsprechend gute Naßrutschfestigkeit (Sicherheit) ;

c) hoher Abriebwiderstand und dementsprechend hohe Laufleistung (Wirtschaftlichkeit).

Diese Eigenschaftskombination wird mit den Kautschuken des Standes der Technik, beispielsweise den in der DE-C 21 58 575 beschriebenen Blockhomopolymerisaten des 1,3-Butadiens, nur unvollkommen verwirklicht. Diese Blockhomopolymerisate weisen die folgenden Merkmale auf :

1) Sie werden durch adiabatische Polymerisation in einem inerten, organischen Lösemittel in Gegenwart eines lithiumorganischen Katalysators und einer Lewis-Base aus der Gruppe der Ether und der tertiären Amine als Cokatalysator bei steigender Temperatur erhalten, wobei im Laufe der Polymerisation die Temperatur 155 °C überschritten wird.

2) Sie bestehen aus Makromolekülen, in deren Haupt- und Seitenketten, bedingt durch den Temperaturverlauf bei der Herstellung im Temperaturbereich bis 155 °C, die Häufigkeiten der Struktureinheiten (SE), die durch 1,2-Polymerisation von 1,3-Butadien erhalten sind, und entsprechend auch die Häufigkeiten der Vinylseitengruppen, stetig abnehmen und die Häufigkeiten der SE, die durch 1,4-Polymerisation von 1,3-Butadien erhalten sind, stetig zunehmen. In den Kettensegmenten, die bei > 155 °C erhalten sind, ändern sich die Häufigkeiten praktisch nicht mehr.

3) Die Makromoleküle weisen Folgen von Kettensegmenten auf, deren Glasübergänge (Einfrierbereiche, Tg's) entsprechend der zeitlichen Folge bei ihrer Herstellung im allgemeinen bei einem Tg im Bereich von — 25 bis — 40 °C beginnend stetig bis zu einem Tg im Bereich von — 80 bis — 95 °C abnehmen. Der abnehmenden Tendenz der Tg's entspricht die zunehmende Tendenz der Segmentbeweglichkeiten der Kettensegmente in den Haupt- und Seitenketten der Makromoleküle.

Der Tg eines Kettensegmentes entspricht jeweils dem Tg eines unter gleichen Bedingungen erhaltenen Polymerisates. Zur Bestimmung des Tg eines Polymerisates kann man in der Weise vorgehen, daß man das Polymerisat im Torsionsschwingungsversuch (freie Schwingung) unter Bedingungen prüft, welche hinsichtlich der Herstellung eines vulkanisierten Probekörpers (analog der in der ISO 2322-1985 (E), Series A für SBR angegebenen Vorschrift) und des Meßverfahrens (DIN 53 520) definiert sind, und dabei die Temperaturabhängigkeit des logarithmischen Dekrementes der mechanischen Dämpfung bestimmt. Die grafische Darstellung der daraus abgeleiteten Temperaturabhängigkeit des mechanischen Verlustfaktors tan delta liefert eine Kurve (tan delta-Kurve) mit einem Maximum. Der diesem Maximum entsprechende, mehr oder weniger enge Temperaturbereich ist Tg.

Bei einer allgemeinen Betrachtung der Segmentbeweglichkeit ist festzustellen, daß diese von der Sperrigkeit der Seitengruppen und von ihrer Häufigkeit im Segment abhängig ist. Man kann auch sagen, sie ist von der Art der SE und ihrer Häufigkeit im Segment abhängig.

Bei den Blockhomopolymerisaten des 1,3-Butadiens entspricht die die Segmentbewegungen behindernde Wirkung der SE der Reihenfolge :

SE, erhalten durch 1,2-Polymerisation von 1,3-Butadien

> SE, erhalten durch 1,4-Polymerisation von 1,3-Butadien.

Ein typisches Blockhomopolymerisat der DE-C 21 58 575 wird in Abwesenheit von Verzweigungsmitteln unter folgenden Bedingungen erhalten : Polymerisation in Hexan in Gegenwart einer polymerisationswirksamen (aktiven) Menge von 0,04 Massen-% n-Butyllithium als Katalysator und von 1 Massen-% Ethylenglykoldimethylether als Cokatalysator, jeweils bezogen auf das Polymerisat, wobei die Polymerisation bei 30 °C begonnen und bei 160 °C beendet wird.

Das so erhaltene Blockhomopolymerisat läßt sich durch seine tan delta-Kurve, die wie oben angegeben erhalten wird, charakterisieren. Die Kurve weist nur ein Maximum auf und ist ziemlich schmal.

Man kann auch sagen, die tan delta-Kurve weist in halber Höhe eine geringe Breite auf (geringe Halbwertsbreite).

Dem Kurvenverlauf entsprechend läßt sich mit dem erhaltenen Blockhomopolymerisat die eingangs beschriebene Eigenschaftskombination nur unvollkommen verwirklichen.

Die Aufgabe der Erfindung ist es, den geschilderten Mangel zu überwinden.

Weitere Eigenschaften, die verwirklicht werden sollen, sind die gute Verarbeitbarkeit der Kautschukkomponente bei den Mischprozessen, die gute Verarbeitbarkeit der vulkanisierbaren Massen bei den Verformungsprozessen und ein gutes Vulkanisationsverhalten der vulkanisierbaren Massen (Rohlaufstreifen) hinsichtlich Vulkanisationsgeschwindigkeit und Vernetzungsausbeute bei der Weiterverarbeitung zu den Reifenlaufflächen.

**0 173 791**

Die Aufgabe wurde in überraschender Weise durch Bereitstellung des im Patentanspruch 1 angegebenen Kautschukgemisches gelöst. Besonders vorteilhafte Lösungen der Aufgabe entsprechen den Patentansprüchen 2 bis 5.

Die Erfindung stellt somit ein Kautschukgemisch mit den folgenden Merkmalen bereit :

a) Es besteht aus einem amorphen Blockcopolymerisat und einem Polybutadien, das durch Ziegler-Polymerisation erhalten ist. Das Polybutadien enthält ≤ 10 Massen-% Struktureinheiten, die durch 1,2-Polymerisation von 1,3-Butadien und ≥ 90 Massen-% Struktureinheiten, die durch 1,4-Polymerisation von 1,3-Butadien erhalten sind.

b.1) Das Blockcopolymerisat ist erhalten aus 1,3-Butadien und 10 bis < 55 Massen-% Isopren und 0 bis < 1 Massen-% Styrol oder 10 bis < 35 Massen-% Isopren und 1 bis 15 Massen-% Styrol, jeweils bezogen auf das Blockcopolymerisat, wobei jeweils Polystyrolblöcke ausgeschlossen sind.

b.2) Es ist durch Polymerisation in einem inerten, organischen Lösemittel in Gegenwart eines lithiumorganischen Katalysators und einer Lewis-Base aus der Gruppe der Ether, der tertiären Amine und ihrer Gemische als Cokatalysator erhalten.

b.3) Es enthält 45 bis 80 Massen-% Struktureinheiten, die durch 1,2- und 3,4-Polymerisation der Diene und durch Polymerisation von Styrol und 20 bis 55 Massen-% Struktureinheiten, die durch 1,4-Polymerisation der Diene erhalten sind.

b.4) Es weist Folgen von Kettensegmenten in seinem Makromolekülen auf, deren Glasübergänge (Einfrierbereiche, Tg's) einen Tg-Bereich oder 2 oder 3 Teilbereiche eines Tg-Bereichs abdecken, der im Bereich von — 5 bis — 20 °C beginnt und im Bereich von — 50 bis — 105 °C endet.

b.5) Der von ihm abgedeckte Tg-Bereich oder 1 bis 3 Teilbereiche des Tg-Bereichs entsprechen Kettensegmenten oder Folgen von Kettensegmenten, die Verzweigungsmittel an Verzweigungsstellen eingebaut enthalten.

c) Das Kautschukgemisch ist durch die folgenden, zusätzlichen Merkmale charakterisiert :

c.1) Die den Folgen von Kettensegmenten in seinen Makromolekülen entsprechenden Folgen von Tg's (vgl. Merkmal b.4) sind dadurch charakterisiert, daß die Tg's beim maximalen Tg beginnend stetig bis zum minimalen Tg des abgedeckten Bereichs oder des ersten der abgedeckten Teilbereiche, abgedeckt durch Folgen von Kettensegmenten im Blockcopolymerisat, abnehmen.

c.2) Es weist eine Mooney-Viskosität ($ML_{1+4}$, 100 °C, DIN 53 523) von 30 bis 130, eine Defo-Elastizität (80 °C, DIN 53 514) von 12 bis 45 und eine Uneinheitlichkeit [U = (Mw/Mn)— 1] von 0,8 bis 5,5 auf.

c.3) Aus dem Kautschukgemisch wird analog der in der ISO 2322-1985 (E), Series A, für SBR angegebenen Vorschrift ein vulkanisierter Probekörper erhalten und nach DIN 53 520 die Temperaturabhängigkeit des logarithmischen Dekrementes der mechanischen Dämpfung bestimmt. Die grafische Darstellung der daraus abgeleiteten Temperaturabhängigkeit des mechanischen Verlustfaktors tan delta liefert die tan delta-Kurve. Diese weist nur ein ausgeprägtes, stumpfes Maximum auf.

Unter Blockcopolymerisaten werden Polymerisate verstanden, welche Blöcke aufweisen, die dadurch charakterisiert sind, daß die Kettensegmente, welche von beiden Seiten an eine Blockgrenze Stoßen, sich in der Art oder in der Zahl der zugrunde liegenden Monomeren unterscheiden.

Das Merkmal c.3 im Patentanspruch 1 gilt als Auswahlkriterium, das bei den Kautschukgemischen aus denen ausgewählt werden soll, in der Regel erfüllt ist.

Der abnehmenden Tendenz der Tg's der Kettensegmente in den Makromolekülen des Blockcopolymerisates entspricht die zunehmende Tendenz der Segmentbeweglichkeiten.

Die die Segmentbewegungen behindernde Wirkung der SE entspricht der Reihenfolge :

SE, erhalten durch Polymerisation von Styrol > SE, erhalten durch 1,2- oder 3,4-Polymerisation von Isopren > SE, erhalten durch 1,2-Polymerisation von 1,3-Butadien > SE, erhalten durch 1,4-Polymerisation von Isopren > SE, erhalten durch 1,4-Polymerisation von 1,3-Butadien.

Die Blockcopolymerisate weisen im Falle hoher Polymerisationstemperaturen (> 90 °C) Langkettenverzweigungen auf. Diese sind erwünscht im Hinblick auf einen möglichst niedrigen kalten Fluß. Falls die Langkettenverzweigungen nicht ausreichen, kann man die Polymerisation in Gegenwart von Verzweigungsmitteln, beispielsweise in Gegenwart von 0,02 bis 0,08 Massen-% Divinylbenzol, bezogen auf das Blockcopolymerisat, oder in Gegenwart von tertiärem Butylchlorid, durchführen.

Man kann Verzweigungen der Blockcopolymerisate auch durch Kupplungsreaktionen mit geeigneten Kupplungsmitteln, d. h. speziellen Verzweigungsmitteln, herbeiführen. So kann man beispielsweise die Lösungen der den Blöcken der Blockcopolymerisate entsprechenden Polymerisate, welche als living polymers vorliegen, in Gegenwart von Tetrachlorkohlenstoff vereinigen, so daß sternförmige Blockcopolymerisate erhalten werden.

Es wurde gefunden, daß der Einbau von Verzweigungsmitteln an Verzweigungsstellen in den durch Lithiumpolymerisation erhaltenen Makromolekülen nicht nur vorteilhaft ist im Hinblick auf einen möglichst niedrigen kalten Fluß der Blockcopolymerisate sondern auch im Hinblick auf eine möglichst vollkommene Verwirklichung der eingangs beschriebenen Eigenschaftskombination.

Die SE, die durch 1,2-, 3,4- und 1,4-Polymerisation der Diene und durch Polymerisation von Styrol erhalten sind, werden jeweils durch IR-Analyse bestimmt.

Die Blockcopolymerisate werden im allgemeinen durch Polymerisation der Monomeren in einem Kohlenwasserstoff-Lösemittel in Gegenwart einer polymerisationswirksamen (aktiven) Menge von 0,02

3

bis 0,08 Massen-% eines $C_4$-Alkyllithiums, insbesondere n-Butyllithium, als Katalysator und von 0,2 bis 2 Massen-% einer bifunktionellen Lewis-Base als Cokatalysator (jeweils bezogen auf das Blockcopolymerisat) bein einem Massenverhältnis von Cokatalysator/aktivem Katalysator von 3 : 1 bis 200 : 1 im Temperaturbereich von 30 bis 170 °C erhalten, wobei die Polymerisation bei ≤ 40 °C begonnen und bei ≥ 80 °C, vorzugsweise bei ≥ 130 °C, beendet wird.

Der Temperaturverlauf in Abhängigkeit vom Monomerumsatz bei der Herstellung der Blockcopolymerisate kann auf unterschiedliche Weise gesteuert werden, beispielsweise durch das Lösemittel/Monomer-Mengenverhältnis, durch die Temperatur von zudosiertem Monomer und/oder Lösemittel und durch Zu- oder Abführung von Wärme.

Die Blockcopolymerisate können durch diskontinuierliche oder kontinuierliche Polymerisation erhalten werden.

Die Blockcopolymerisate weisen im allgemeinen die folgenden Merkmale auf, wobei zur Charakterisierung der Blöcke die Abkürzungen gelten :

Tk : erhalten bei konstanter Polymerisationstemperatur (isotherme Polymerisation) ;

Ts : erhalten bei stetig steigender Polymerisationstemperatur (Spezialfall : adiabatische Polymerisation) ;

Mk : erhalten bei konstanter Monomerzusammensetzung ;

Ms : erhalten bei stetig sich ändernder Monomerzusammensetzung ;

% : Massen-%, bezogen auf das zugrundeliegende Monomerengemisch.

AB-Blockcopolymerisate

1) Block A : Ts, Mk : Isopren ; vor Beginn von Block B wird die Temperatur gesenkt ;
Block B : Ts, Mk : 1,3-Butadien ;
2) Block A : Tk, Ms : Isopren, beginned bei 100 %, stetig fallend bis 0 % ; 1,3-Butadien, beginnend bei 0 %, stetig steigend bis 100 %  ;
Block B : Ts ; Mk : 1,3-Butadien.

ABC-Blockcopolymerisate

3) Block A : Ts, Mk : Isopren ;
Block B : Tk oder Ts, Ms : Isopren, beginned bei 100 %, stetig fallend bis 0 % ; 1,3-Butadien, beginnend bei 0 %, stetig steigend bis 100 % ;
Block C : Ts, Mk : 1,3-Butadien.

AB-Blockcopolymerisate

4) Block A : Ts, Mk : 80 bis 90 % Isopren ; 10 bis 20 % Styrol ; vor Beginn von Block B wird die Temperatur gesenkt ;
Block B : Ts, Mk : 1,3-Butadien ;
5) Block A : Tk, Ms : Isopren, beginnend bei 75 bis 90 % ; Styrol, beginnend bei 10 bis 25 %, beide stetig fallend bis 0 % ; 1,3-Butadien, beginnend bei 0 %, stetig steigend bis 100 % ;
Block B : Ts, Mk : 1,3-Butadien.

ABC-Blockcopolymerisate

6) Block A : Ts, Mk : 80 bis 90 % Isopren ; 10 bis 20 % Styrol ;
Block B : Tk oder Ts, Ms : Isopren und Styrol, beginnend mit den Anteilen gemäß Block A, beide stetig fallend bis 0 % ; 1,3-Butadien, beginnend bei 0 %, stetig steigend bis 100 % ;
Block C : Ts, Mk : 1,3-Butadien ;
7) Block A : Tk, Ms : Isopren, beginnend bei 80 bis 90 %, stetig fallend bis 0 % ; Styrol konstant bei 10 bis 20 % ; 1,3-Butadien, beginnend bei 0 %, stetig steigend bis 80 bis 90 % ;
Block B : Tk oder Ts, Ms : Styrol und 1,3-Butadien, beginnend mit den Anteilen gemäß dem Ende von Block A ; Styrol stetig fallend bis 0 % ; 1,3-Butadien stetig steigend bis 100 % ;
Block C : Ts, Mk : 1,3-Butadien.

Die Blockcopolymerisate sind im allgemeinen aus 15 bis < 35 Massen-% Isopren und > 65 bis 85 Massen-% 1,3-Butadien oder aus 10 bis 30 Massen-% Isopren, 5 bis 15 Massen-% Styrol und 55 bis 85 Massen-% 1,3-Butadien, jeweils bezogen auf das Blockcopolymerisat, erhalten.

Das Polybutadien ist auf bekannte Weise erhältlich (siehe beispielsweise Hydrocarbon Processing, Vol. 44, No. 11, Nov. 1965, Seite 260).

Das Kautschukgemisch der Erfindung zeichnet sich dadurch aus, daß die gemäß Merkmal c.3 des Patentanspruchs 1 erhaltene tan delta-Kurve wesentlich breiter ist als die entsprechend erhaltene tan delta-Kurve eines typischen Blockhomopolymerisates des Standes der Technik.

Diese Tatsache ist ein Indiz dafür, daß die eingangs beschriebene Eigenschaftskombination mit Reifenlaufflächen auf Basis eines Kautschukgemisches der Erfindung wesentlich besser verwirklicht werden kann als mit den Reifenlaufflächen des Standes der Technik.

Die tan delta-Kurve zeigt einen anderen Verlauf, wenn man statt des oben angegebenen Meßverfahrens ein solches mit einem dynamischen Viskoelastometer (RHEOVIBRON-Gerät, erzwungene Schwingung bei 1 Hz) anwendet. Dem Kurvenverlauf in verschiedenen, charakteristischen Temperaturbereichen lassen sich bestimmte Eigenschaften der Reifenlaufflächen zuordnen.

Zur Illustration dient die tan delta-Kurve auf Basis eines Kautschukgemisches der Erfindung (Beispiel 1) mit den Temperaturbereichen 1 bis 5 (siehe Zeichnung).

Dem Kurvenverlauf in den Temperaturbereichen 1 bis 5 können folgende Eigenschaften der Reifenlaufflächen zugeordnet werden :

1 Tieftemperaturverhalten (low temperature properties) und Abrieb (abrasion)

2 Wintertauglichkeit

3 Naßrutschfestigkeit (wet traction)

4 Rollwiderstand (rolling resistance)

5 dynamische Erwärmung (heat build-up)

Mit dem Verlassen des totalen Glaszustandes wird der Beginn des gummielastischen Verhaltens angezeigt. Der Kurvenverlauf erlaubt Aussagen über das Tieftemperaturverhalten und den Abrieb (Temperaturbereich 1).

Der Kurvenverlauf im Temperaturbereich 2 erlaubt Aussagen über die Wintertauglichkeit.

Im Temperaturbereich 3 gilt das Niveau von tan delta als entscheidendes Indiz für das Rutschverhalten, insbesondere auf nasser Straße (tan delta sollte ausreichend hoch sein).

Der Temperaturbereich 4 umfaßt die überlicherweise auftretenden Lauftemperaturen eines Reifens. Der Kurvenverlauf bestimmt im wesentlichen den Rollwiderstand (tan delta sollte möglichst niedrig sein).

Der Temperaturbereich 5 entspricht der höchsten Beanspruchung des Reifens, wobei Grenzbereiche der Funktionstüchtigkeit mit der Gefahr der Zerstörung erreicht werden. Der Kurvenverlauf gestattet die Abschätzung des heat-build-up-Verhaltens und der beginnenden thermischen Zersetzung und damit der Grenzen der Belastbarkeit des Reifens (tan delta sollte möglichst niedrig sein).

Die tan delta-Kurve gibt dem Fachmann die notwendige Orientierung, um mit Hilfe der Lehre der Erfindung durch Variation der Herstellungsparameter für die vulkanisierbare Masse Reifenlaufflächen mit der jeweils gewünschten Eigenschaftskombination, sozusagen Reifenlaufflächen nach Maß, bereitzustellen.

Die vulkanisierbaren Massen bestehen im allgemeinen aus einer amorphen Kautschukkomponente, einem aktiven, verstärkenden Füllstoff, einer wirksamen Menge eines Vulkanisationsmittels und üblichen Zusatzstoffen.

Die Kautschukkomponente besteht im allgemeinen aus 60 bis 100 Massen-% des Kautschukgemisches der Erfindung und 0 bis 40 Massen-% eines oder mehrerer Kautschuke aus der Gruppe der bekannten Allzweckkautschuke.

Die Kautschukkomponente besteht in der Regel aus nicht mehr als vier, vorzugsweise aus nicht mehr als drei Verschnittkomponenten. Die Menge einer Verschnittkomponete ist in der Regel ≥ 10 Massen-%.

Aktive, verstärkende Füllstoffe sind beispielsweise Laufflächenruße unterschiedlicher Aktivität, insbesondere solche aus der N-300-Reihe (ASTM), mit Silan-Haftvermittlern behandelte, aktive Kieselsäuren und ihre Gemische. Sie können in üblichen Mengen zugesetzt werden.

Unter Vulkanisationsmitteln werden die bekannten Vulkanisationssysteme verstanden. Ein bevorzugtes Vulkanisationssystem enthält Schwefel in Kombination mit den üblichen Beschleunigern. Die Menge des Vulkanisationsmittels richtet sich nach den übrigen Komponenten in der vulkanisierbaren Masse und kann durch einfache, orientierende Versuche ermittelt werden.

Als Zusatzstoff können die in der Kautschuktechnik üblichen Weichmacheröle eingesetzt werden. Bevorzugt sind aromatische, aliphatische und naphthenische Kohlenwasserstoffe. Sie können in üblichen Mengen zugesetzt werden.

Als Zusatzstoff können auch weitere übliche Hilfsmittel, wie beispielsweise Harzsäuren, Alterungsschutzmittel und Ozonschutzwachse, in üblichen Mengen zugesetzt werden.

Zur Herstellung der vulkanisierbaren Massen aus ihren Komponenten und zur Weiterverarbeitung zu den Rohlaufstreifen und den Vulkanisaten (Reifenlaufflächen) können die in der Reifenindustrie üblichen Misch-, Verformungs- und Vulkanisationsanlagen dienen, wie beispielsweise Innenmischer, Walzwerke, Extruder, Kalander, Spritzgießeinrichtungen, Vulkanisationspressen und kontinuierlich arbeitende Vernetzungsanlagen.

Die vulkanisierbaren Massen eignen sich zur Herstellung der Laufflächen von Pkw- und Lkw-Reifen, und zwar sowohl zur Herstellung von Neureifen als auch zur Runderneuerung von Altreifen.

Die so erhaltenen Reilenlaufflächen besitzen Allwettereigenschaften. Dementsprechend können die Reifen als Ganzjahresreifen eingesetzt werden (Alljahrestauglichkeit).

Bevorzugte, vulkanisierbare Massen enthalten 40 bis 60 Massen-% eines Füllstoffs und 0 bis 20 Massen-% eines Weichmacheröls, jeweils bezogen auf die Kautschukkomponente.

Der Füllstoff ist vorzugsweise ein oder mehrere Laufflächenruße oder ein Gemisch aus 80 bis 95 Massen-% eines oder mehrerer Laufflächenruße und 5 bis 20 Massen-% eines oder mehrerer, mit Silan-Haftvermittlern behandelter, aktiver Kieselsäuren.

Die Gruppe der Allzweckkautschuke besteht vorzugsweise aus SBR mit 10 bis 25 Massen-% SE, die durch Polymerisation von Styrol erhalten sind, wobei Polystyrolblöcke ausgeschlossen sind, 1,4-cis-IR und NR.

Die mit den bevorzugten, vulkanisierbaren Massen erhaltenen Reifenlaufflächen zeichnen sich darüberhinaus durch einen niedrigen Rollwiderstand (hohe Wirtschaftlichkeit, bedingt durch geringen Energieverzehr und dementsprechend geringen Treibstoffverbrauch) bei hoher Naßrutschfestigkeit (Sicherheit) aus. Hervorzuheben ist auch die außergewöhnlich hohe Reversionsstabilität beim Vulkanisationsprozeß und die außergewöhnlich hohe Netzwerkstabilität der Reifenlaufflächen bei dynamischer Beanspruchung. Die bevorzugten, vulkanisierbaren Massen eignen sich daher besonders zur Herstellung der Laufflächen von Lkw-Reifen.

Die Erfindung wird durch die folgenden Herstellungsvorschriften und das folgende Beispiel 1 erläutert. Darin bedeuten Teile (T.) Massenteile.

Herstellung des Blockcopolymerisates 1

215 T. Hexan, 30 T. Isopren, 0,6 T. Ethylenglykoldimethylether (DME) und 0,014 T. Divinylbenzol (DVB) wurden unter sorgfältigem Ausschluß von Luft und Feuchtigkeit in einen Rührautoklaven gegeben. Bei 40 °C wurde die Polymerisation durch Zugabe von n-Butyllithium (0,038 T. aktiver Katalysator) gestartet. Die Temperatur stieg durch die freiwerdende Polymerisationswärme an und erreichte nach 12 min 58 °C (ca. 50 % Umsatz des Isoprens). Dann wurde mit der gleichmäßigen Zugabe einer Lösung von 70 T. 1,3-Butadien und 0,032 T. DVB in 104 T. Hexan, welche eine Temperatur von 40 °C hatte, begonnen. Die Zugabe war nach 5 min beendet. Die Temperatur stieg bis 148 °C an. Nach Beendigung der Polymerisation wurden 0,5 T. 2,2-Methylen-bis-(4-methyl-6-tertiärbutylphenol) zugegeben. Das Lösemittel wurde mit Wasserdampf abgetrennt und das Polymerisat getrocknet und wie in der Tabelle angegeben charakterisiert.

Herstellung des Blockcopolymerisates 2

215 T. Hexan, 30 T. Isopren, 1,2 T. DME und 0,03 T. DVB wurden wie oben zusammengegeben. Bei 40 °C wurde die Polymerisation durch Zugabe von n-Butyllithium (0,045 T. aktiver Katalysator) gestartet. Die Temperatur erreichte 30 min danach 65 °C (100 % Umsatz des Isoprens). Nach Abkühlung auf 44 °C wurde mit der gleichmäßigen Zugabe einer Lösung von 70 T. 1,3-Butadien in 104 T. Hexan, welche eine Temperatur von 40 °C hatte, begonnen.

Die Zugabe war nach 10 min beendet. Die Temperatur stieg bis 80 °C an. Nach Beendigung der Polymerisation wurde wie oben verfahren (Tabelle).

Beispiel 1 (Kautschukgemisch der Erfindung)

70 T. des Blockcopolymerisates 2 und 30 T. des in der Tabelle angegebenen Polybutadiens wurden in einem Innenmischer gemischt. Aus dem so erhaltenen Kautschukgemisch wurde analog der in der ISO 2322-1985 (E), Series A für SBR angegebenen Vorschrift ein vulkanisierter Probekörper erhalten. Nach DIN 53 520 wurde die Temperaturabhängigkeit des logarithmischen Dekrementes der mechanischen Dämpfung bestimmt. Die grafische Darstellung der daraus abgeleiteten Temperaturabhängigkeit des mechanischen Verlustfaktors tan delta lieferte die tan delta-Kurve. Diese weist nur ein ausgeprägtes, stumpfes Maximum auf.

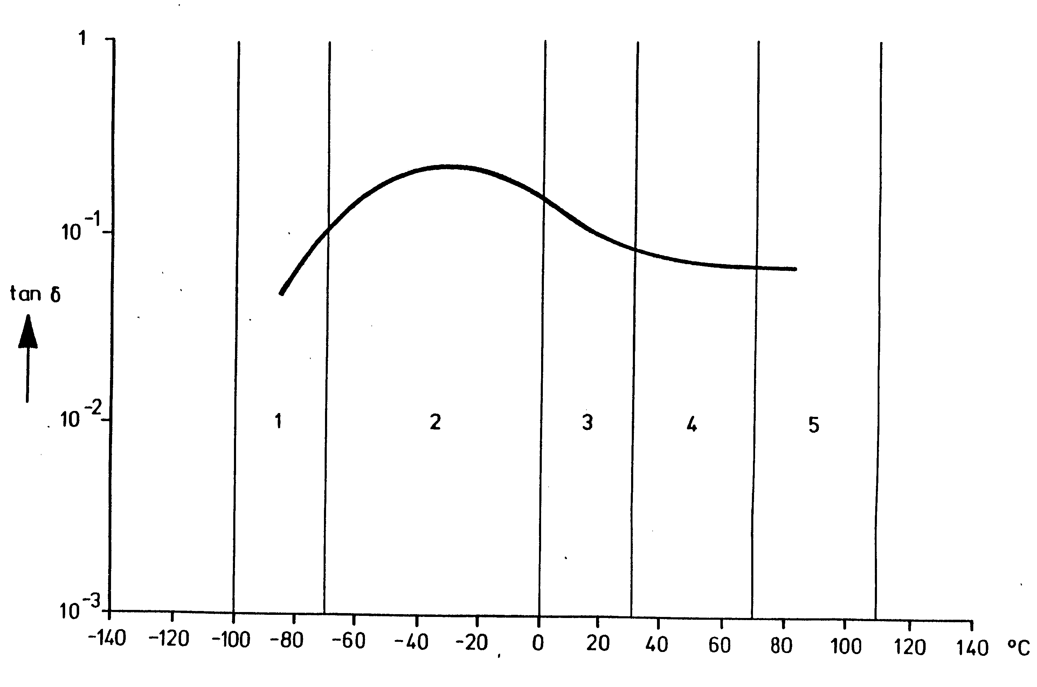

Die auf ähnliche Weise, jedoch aufgrund von Messungen mit einem dynamischen Viskoelastometer (RHEOVIBRON-Gerät, erzwungene Schwingung bei 1 Hz) erhaltene tan delta-Kurve ist in der Zeichnung abgebildet.

Aus dem Kautschukgemisch kann in bekannter Weise eine in der Hitze vulkanisierbare Masse erhalten werden. Diese gestattet die Herstellung von Reifenlaufflächen, welche die eingangs beschriebene Eigenschaftskombination wesentlich besser als nach dem Stand der Technik verwirklichen.

## Tabelle

### Charakterisierung der Polymerisate

| Polymerisat | Blockcopoly-merisat 1 | Blockcopoly-merisat 2 | Polybutadien *** |
|---|---|---|---|
| Gelgehalt /Massen-%/ *) | ‹ 1 | ‹ 1 | ‹ 1 |
| SE, erhalten durch 1,2-Poly-merisation der Diene /Massen-%/ **) | 34 | 47 | 1 |
| SE, erhalten durch 3,4-Poly-merisation des Isoprens /Massen-%/ **) | 26 | 27 | - |
| $ML_{1+4}$, 100 °C, DIN 53 523 | 76 | 52 | 47 |
| Defo-Elastizität, 80 °C, DIN 53 514 | 27 | 26 | 32 |
| Tg /°C/ | - | - | ca. -100 |

*) bestimmt nach der in der DE-PS 21 58 575, Spalte 12 ff, beschriebenen Methode ;

**) bestimmt durch IR-Analyse ;

***) handelsübliches, hoch-cis-Polybutadien, das durch Ziegler-Polymerisation mit einem Kobalt-Katalysator erhalten ist und Verzweigungen aufweist.

**0 173 791**

## Patentansprüche

1. Kautschukgemisch mit den folgenden Merkmalen :

a) es besteht aus einem amorphen Blockcopolymerisat und einem Polybutadien, das durch Ziegler-Polymerisation erhalten ist ; das Polybutadien enthält ≤ 10 Massen-% Struktureinheiten, die durch 1,2-Polymerisation von 1,3-Butadien und ≥ 90 Massen-% Struktureinheiten, die durch 1,4-Polymerisation von 1,3-Butadien erhalten sind ;

b.1) das Blockcopolymerisat ist erhalten aus 1,3-Butadien und 10 bis < 55 Massen-% Isopren und 0 bis < 1 Massen-% Styrol oder 10 bis < 35 Massen-% Isopren und 1 bis 15 Massen-% Styrol, jeweils bezogen auf das Blockcopolymerisat, wobei jeweils Polystyrolblöcke ausgeschlossen sind ;

b.2) es ist durch Polymerisation in einem inerten, organischen Lösemittel in Gegenwart eines lithiumorganischen Katalysators und einer Lewis-Base aus der Gruppe der Ether, der tertiären Amine und ihrer Gemische als Cokatalysator erhalten ;

b.3) es enthält 45 bis 80 Massen-% Struktureinheiten, die durch 1,2- und 3,4-Polymerisation der Diene und durch Polymerisation von Styrol und 20 bis 55 Massen-% Struktureinheiten, die durch 1,4-Polymerisation der Diene erhalten sind ;

b.4) es weist Folgen von Kettensegmenten in seinen Makromolekülen auf, deren Glasübergänge (Einfrierbereiche, Tg's) einen Tg-Bereich oder 2 oder 3 Teilbereiche eines Tg-Bereichs abdecken, der im Bereich von — 5 bis — 20 °C beginnt und im Bereich von — 50 bis — 105 °C endet ;

b.5) der von ihm abgedeckte Tg-Bereich oder 1 bis 3 Teilbereiche des Tg-Bereichs entsprechen Kettensegmenten oder Folgen von Kettensegmenten, die Verzweigungsmittel an Verzweigungsstellen eingebaut enthalten ;

c) das Kautschukgemisch ist durch die folgenden, zusätzlichen Merkmale charakterisiert :

c.1) die den Folgen von Kettensegmenten in seinen Makromolekülen entsprechenden Folgen von Tg's (vgl. Merkmal b.4) sind dadurch charakterisiert, daß die Tg's beim maximalen Tg beginnend stetig bis zum minimalen Tg des abgedeckten Bereichs oder des ersten der abgedeckten Teilbereiche, abgedeckt durch Folgen von Kettensegmenten im Blockcopolymerisat, abnehmen ;

c.2) es weist eine Mooney-Viskosität ($ML_{1+4}$, 100 °C, DIN 53 523) von 30 bis 130, eine Defo-Elastizität (80 °C, DIN 53 514) von 12 bis 45 und eine Uneinheitlichkeit [U = (Mw/Mn) — 1] von 0,8 bis 5,5 auf ;

c.3) aus dem Kautschukgemisch wird analog der in der ISO 2322-1985 (E), Series A, für SBR angegebenen Vorschrift ein vulkanisierter Probekörper erhalten und nach DIN 53 520 die Temperaturabhängigkeit des logarithmischen Dekrementes der mechanischen Dämpfung bestimmt ; die grafische Darstellung der daraus abgeleiteten Temperaturabhängigkeit des mechanischen Verlustfaktors tan delta liefert die tan delta-Kurve ; diese weist nur ein ausgeprägtes, stumpfes Maximum auf.

2. Kautschukgemisch nach Anspruch 1, gekennzeichnet durch das folgende Merkmal :

d) es weist eine Mooney-Viskosität von 40 bis 100, eine Defo-Elastizität von 20 bis 40 und eine Uneinheitlichkeit von 1 bis 4 auf.

3. Kautschukgemisch nach Anspruch 1 oder 2, gekennzeichnet durch das folgende Merkmal :

e) es besteht zu ≤ 90 Massen-% aus dem Blockcopolymerisat und zu ≥ 10 Massen-% aus dem Polybutadien.

4. Kautschukgemisch nach einem der Ansprüche 1 bis 3, gekennzeichnet durch das folgende Merkmal :

f) das Polybutadien ist mit einem Kobalt-Katalysator erhalten und weist Verzweigungen auf.

5. Kautschukgemisch nach einem der Ansprüche 1 bis 4, gekennzeichnet durch das folgende Merkmal :

g) das Blockcopolymerisat enthält 0,02 bis 0,08 Massen-% Divinylbenzol, welches an Verzweigungsstellen in den Makromolekülen eingebaut ist.

## Claims

1. A rubber mixture having the following features :

a) it consists of an amorphous block copolymer and a polybutadiene which has been obtained by Ziegler polymerisation, the polybutadiene containing not more than 10 % by mass of structural units obtained by 1,2-polymerisation of 1,3-butadiene and at least 90 % by mass of structural units obtained by 1,4-polymerisation of 1,3-butadiene ;

b.1) the block copolymer has been obtained from 1,3-butadiene and either from 10 to less than 55 % by mass of isoprene and from 0 to less than 1 % by mass of styrene or from 10 to less than 35 % by mass of isoprene and from 1 to 15 % by mass of styrene, all based on the block copolymer, polystyrene blocks being excluded in all cases ;

b.2) it has been obtained by polymerisation in an inert organic solvent in the presence of a lithium-organic catalyst and a Lewis base selected from ethers tertiary amines and their mixtures as cocatalyst ;

b.3) it contains 45 to 80 % by mass of structural units which have been obtained by 1,2- and 3,4-

8

polymerisation of the dienes and by polymerisation of styrene and 20 to 55 % by mass of structural units which have been obtained by 1,4-polymerisation of the dienes ;

b.4) in its macromolecule it possesses chain segment sequences whose glass transitions (freezing ranges, Tgs) cover a Tg range or 2 or 3 positions of a Tg range which begins in the region of — 5 to — 20 °C and ends in the region of — 50 to — 105 °C ;

b.5) the Tg range or 1 to 3 portions of the Tg range covered by it correspond to chain segments or chain segment sequences which contain a branching agent built in at branching positions ;

c) the rubber mixture is characterised by the following additional features ;

c.1) the series of Tgs (see feature b.4) corresponding to the chain segment sequences in the macromolecule are characterised in that the Tgs decrease beginning with the maximum Tg continuously down to the minimum Tg of the range covered or the first of the portions covered, covered by the chain segment sequences in the block copolymer ;

c.2) it possesses a Mooney viscosity ($ML_{1+4}$, 100 °C, DIN 53 523) of 30 to 130, a Defo elasticity (80 °C, DIN 53 514) of 12 to 45 and a nonuniformity [$U = (Mw/Mn)— 1$] of 0.8 to 5.5 ;

c.3) a vulcanised test element is obtained from the rubber mixture in an analogous manner to the directions given for SBR in ISO 2322-1985 (E), Series A and the temperature dependence of the logarithmic decrement of its mechanical damping is determined according to DIN 53 520 ; the graphical representation of thereby derived temperature dependence of the mechanical loss factor tan delta furnishes the tan delta curve ; this shows only a markedly stubby maximum.

2. A rubber mixture according to claim 1, characterised by the following feature :

d) it possesses a Mooney viscosity of 40 to 100, a Defo elasticity of 20 to 40 and a nonuniformity of 1 to 4.

3. A rubber mixture according to claim 1 or 2, characterised by the following feature :

e) it consists of not more than 90 % by mass of the block copolymer and at least 10 % by mass of polybutadiene.

4. A rubber mixture according to any of claims 1 to 3, characterised by the following feature :

f) the polybutadiene has been obtained using a cobalt catalyst and possesses branches.

5. A rubber mixture according to any of claims 1 to 4, characterised by the following feature :

g) the block copolymer contains 0.02 to 0.08 % by mass of divinyl benzene which is built into the macromolecule at the branching positions.


**Revendications**

1. Mélange caoutchouteux présentant les caractéristiques suivantes :

a) Il est constitué par un copolymère amorphe en bloc et par un polybutadiène qui est obtenu par polymérisation Ziegler ; le polybutadiène renferme au maximum 10 % en masse d'unités structurales qui sont obtenues par 1,2-polymérisation de 1,3-butadiène et au minimum 90 % en masse d'unités structurales qui sont obtenues par 1,4-polymérisation de 1,3-butadiène ;

b.1) Le copolymère en bloc est obtenu à partir de 1,3-butadiène et de 10 à 55 % en masse au maximum d'isoprène et de zéro à 1 % en masse au maximum de styrène ou de 10 à 35 % en masse au maximum d'isoprène et d'une à 15 % en masse de styrène, rapporté chaque fois au copolymère en bloc, des blocs de polystyrène étant chaque fois exclus ;

b.2) Il est obtenu par polymérisation dans un solvant organique inerte, en présence d'un catalyseur organo-lithium et d'une base de Lewis du groupe des éthers, des amines tertiaires et de leurs mélanges en tant que co-catalyseur ;

b.3) Il renferme de 45 à 80 % en masse d'unités structurales qui sont obtenues par 1,2- et 3,4-polymérisation des diènes et par polymérisation de styrène et de 20 à 55 % en masse d'unités structurales qui sont obtenues par 1,4-polymérisation des diènes ;

b.4) Il présente des séries de segments linéaires dans ses macromolécules, dont les transitions vitreuses (domaines de prise, « Tg's ») recouvrent un domaine Tg ou deux à trois domaines partiels d'un domaine Tg qui commence dans la zone de — 5 à — 20 °C et se termine dans la zone de — 50 à — 105 °C.

b.5) Le domaine Tg couvert par lui ou les uns à trois domaines partiels du domaine Tg correspondent à des segments linéaires ou des séries de segments linéaires renfermant aux points de ramification les agents de ramification nécessaires ;

c) Le mélange caoutchouteux est remarquable par les caractéristiques complémentaires suivantes :

c.1) Les séries de « Tg's » (cf. caractéristique b.4) correspondant aux séries de segments linéaires dans ses macromolécules sont caractérisées par le fait que les « Tg's », en commençant au Tg maximal, décroissent constamment jusqu'au Tg minimal du domaine recouvert ou du premier des domaines partiels recouverts, et recouvertes par les séries de segments linéaires dans le copolymère en bloc :

c.2) Il présente une viscosité Mooney ($ML_{1+4}$, 100 °C, DIN 53 523) de 30 à 130, une élasticité Défo (80 °C, DIN 53 514) de 12 à 45 et une hétérogénéité [$U = (Mw/Mn)— 1$] de 0,8 à 5,5.

9

c.3) A partir du mélange caoutchouteux, on obtient de manière analogue aux prescriptions fournies dans ISO 2322-1985 (E), séries A, pour SBR, une éprouvette vulcanisée et on détermine selon DIN 53 520 la dépendance existant entre la température et le décrément logarithmique de l'amortissement mécanique ; la représentation graphique de la dépendance, que l'on fait ainsi ressortir, et qui existe entre la température et le facteur de perte mécanique tgδ, fournit la courbe tangente δ ; celle-ci ne montre qu'un maximum tronqué, marqué.

2. Mélange caoutchouteux selon la revendication 1, remarquable par la caractéristique suivante :

d) Il présente une viscosité Mooney de 40 à 100, une élasticité Défo de 20 à 40 et une hétérogénéité de 1 à 4.

3. Mélange caoutchouteux selon la revendication 1 ou la revendication 2, remarquable par la caractéristique suivante :

e) Il est constitué pour 90 % en masse au maximum par le copolymère en bloc et pour 10 % en masse au minimum par le polybutadiène.

4. Mélange caoutchouteux selon l'une des revendications 1 à 3, remarquable par la caractéristique suivante :

f) Le polybutadiène est obtenu avec un catalyseur au cobalt et présente des ramifications.

5. Mélange caoutchouteux selon l'une des revendications 1 à 4, remarquable par la caractéristique suivante :

g) Le copolymère en bloc renferme de 0,02 à 0,08 % en masse de divinyl-benzène, qui est inséré aux points de ramification dans les macromolécules.

0 173 791